# EUROPEAN PATENT APPLICATION

(11) **EP 2 148 535 A2**
(43) Date of publication of application: **27.01.2010**
(21) Application number: 09166011.8
(22) Date of filing: 21.07.2009
(51) Int. Cl.: H04W 12/02

(54) **Transmission device and reception device for ciphering process**

(30) Priority: 24.07.2008 JP 2008191017
(71) Applicant: Fujitsu Ltd., Kawasaki-shi, Kanagawa 211-8588 (JP)
(72) Inventor: Abe, Tomoyuki, Kawasaki-shi Kanagawa 211-8588 (JP); Hara, Masayuki, Kawasaki-shi Kanagawa 211-8588 (JP); Furumaki, Yasuhiro, Kawasaki-shi Kanagawa 211-8588 (JP)
(74) Representative: Wilding, Frances Ward

(57) **Abstract**

In a wireless communication system, a transmission device includes: a generation section configured to encrypt information shared between the transmission device and a reception device using first encryption information which changes in accordance with the sequence information, and to generate encrypted data for the shared information; a transmission section configured to transmit, to the reception device, the encrypted data for the shared information; a reception section configured to receive, from the reception device, information about a result of a comparison between the shared information and a result of decrypting the encrypted data for the shared information using second encryption information which changes in accordance with the sequence information assigned to the encrypted ciphering-process-target data at the reception device; and a determination section configured to determine, based on the comparison result, whether the first and second encryption information matches or not.

## Description

### CROSS-REFERENCE TO RELATED APPLICATIONS

This application is based upon and claims the benefit of priority of the prior Japanese Patent Application No. 2008-191017, filed on July 24, 2008, the entire contents of which are incorporated herein by reference.

### FIELD

The present invention relates to a transmission device and a reception device for use in a wireless communications system.

### BACKGROUND

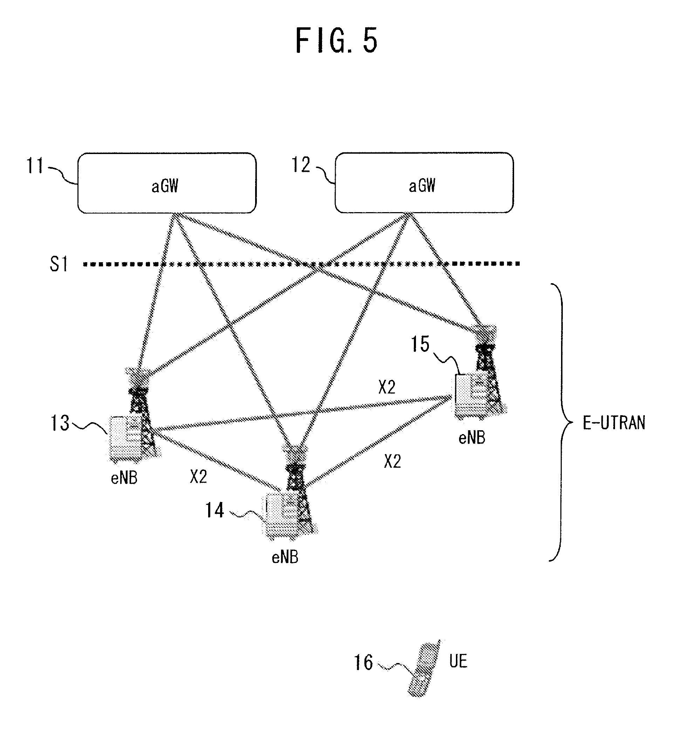

FIG. 5 illustrates the network configuration of a 3rd Generation Partnership Project (3GPP) system. This 3GPP system is configured to include Access Gate Ways (aGWs) 11 and 12 each being a host network, Evolved NodeBs (eNBs) 13 to 15, and a User Equipment device (UE) 16.

The aGWs 11 and 12 each correspond to a Mobile Management Entity/User Plane Entity (MME/UPE), and the eNBs 13 to 15 configure an Evolved UMTS (Universal Mobile Telecommunications System) Terrestrial Radio Access Network (E-UTRAN).

The interface between the aGWs 11 and 12 and the eNBs 13 to 15 is referred to as interface S1, and the interfaces among the eNBs 13 to 15 are each referred to as interfaces X2. These interfaces may each be wired for physical communications. On the other hand, the interface between the eNBs 13 to 15 and the UE 16 is referred to as an interface Uu, and the interface Uu may be wireless for physical communications.

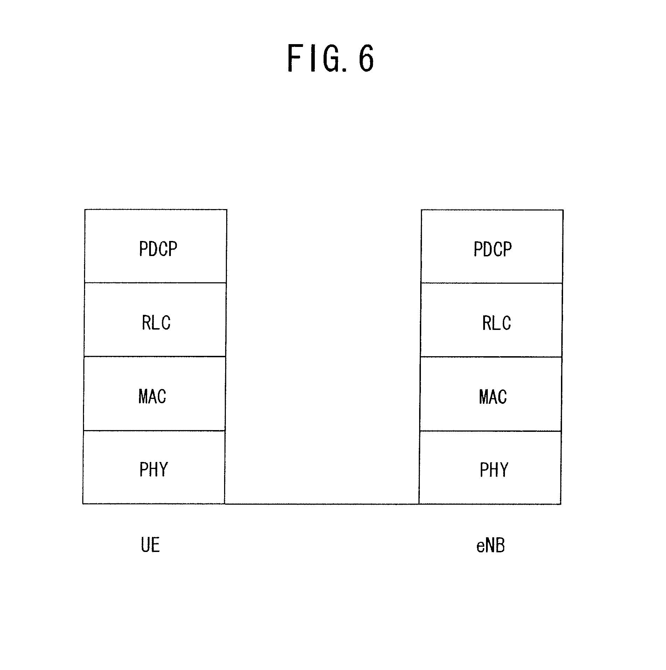

FIG. 6 illustrates an example of a user protocol stack between the eNBs and the UE in the above wireless communications system. This user protocol stack includes a physical (PHY) layer, a Media Access Control (MAC) layer, a Radio Link Control (RLC) layer, and a Packet Data Convergence Protocol (PDCP) layer. Between the eNBs and the UE, for preventing communications interception by third parties, the PDCP layer is subjected to a ciphering process. A ciphering process may include both ciphering and deciphering.

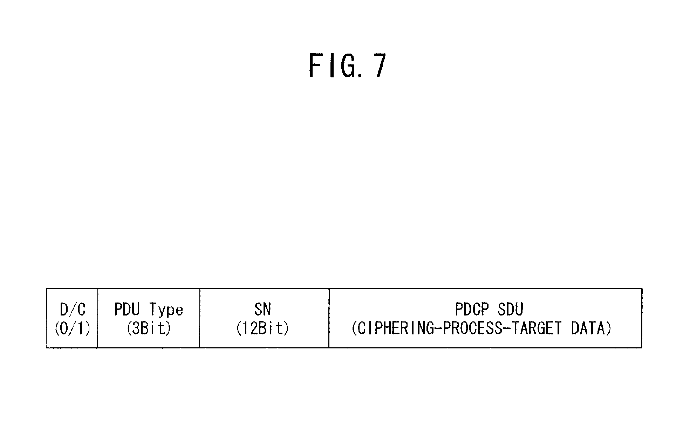

FIG. 7 illustrates a Protocol Data Unit (PDU) format of the PDCP layer, which is hereinafter referred to as PDCP PDU. The PDCP PDU includes elements "D/C", "PDU Type", "SN", and "PDCP SDU" (Service Data Unit).

The element "D/C" indicates "0" if the PDU is a control PDU, and indicates "1" if the PDU is a data PDU. The element "PDU Type" is made up of three reserved bits. The element "SN" indicates a sequence number, and the element "PDCP SDU" indicates audio data, packet data, and others. Among such elements, the element "PDCP SDU" is the part to be subjected to the ciphering process.

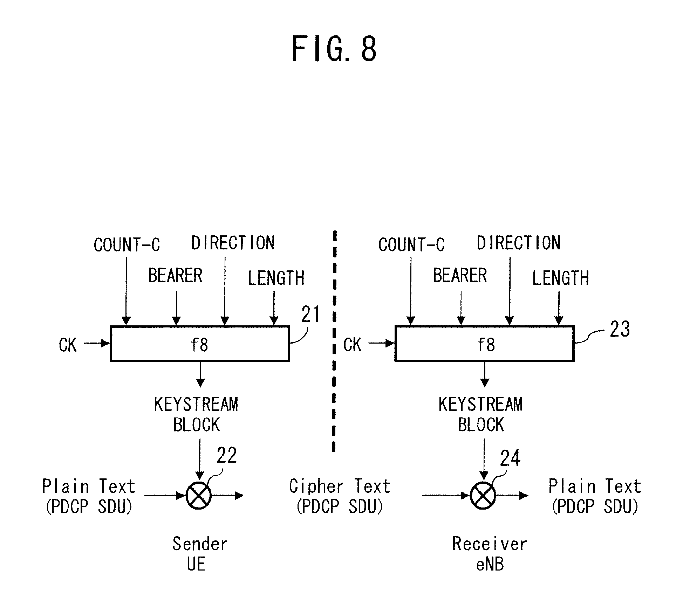

FIG. 8 illustrates an example of a ciphering process to be executed when the PDCP PDU is transmitted from the UE to any of the eNBs. This ciphering process is executed similarly when the PDCP PDU is transmitted from the eNB to the UE.

The UE is configured to include a key generation section 21, and a computation section 22. The key generation section 21 generates a KEYSTREAM BLOCK from parameters used for the ciphering process (hereinafter, referred to as "encryption information") under the management of the UE using an f8 algorithm. The encryption information includes parameters"COUNT-C", "BEARER", "DIRECTION", "LENGTH", and "CK".

The computation section 22 encrypts Plain Text data that is a subject to the ciphering process by calculating an exclusive OR of the Plain Text and the KEYSTREAM BLOCK, thereby generating a Cipher Text. The UE sets the resulting Cipher Text in the PDCP SDU, assigns a value to the element "SN," and transmits the Cipher Text to the eNB.

The eNB is configured to include a key generation section 23, and a computation section 24. The key generation section 23 generates another KEYSTREAM BLOCK from the encryption information under the management of the eNB also using the f8 algorithm. The computation section 24 calculates an exclusive OR of the provided Cipher Text and the KEYSTREAM BLOCK, thereby decrypting the Cipher Text and restoring the Plain Text.

As to the encryption information under the management of the UE and the eNB, the parameters other than the parameter "COUNT-C" are each fixed in value, and these values are each shared by the UE and the eNB. On the other hand, the parameter "COUNT-C" is configured by an element "long-term Hyper Frame Number (HFN)" and an element "short-term sequence number (SN)". The value in the element "HFN" is incremented every time the element "short-period SN" goes through all the values in the sequence. The value in the element "SN" here is the value assigned to the element "SN" in the PDCP PDU. That is, the parameter "COUNT-C" under the respective management of the UE and eNB has the same value for any similar PDCP PDU.

A wireless communications system including a UTRAN as an alternative to the E-UTRAN is also known to execute the ciphering process (see International Publication Pamphlet No. W02005/025127).

However, the wireless communications system described above has the following problem.

In certain circumstances data loss may occur, e.g., when the radio quality is poor, and when the Quality of Service (Qos) control is performed over any wired section, the parameter "COUNT-C" may vary in value between the UE and the eNB. When the parameter "COUNT-C" varies in value as such in the encryption information, the KEYSTREAM BLOCK to be generated may also vary between the transmission and reception ends. As a result, on the reception end, the result of restoration from the provided Cipher Text will not be the same Plain Text as on the transmission end.

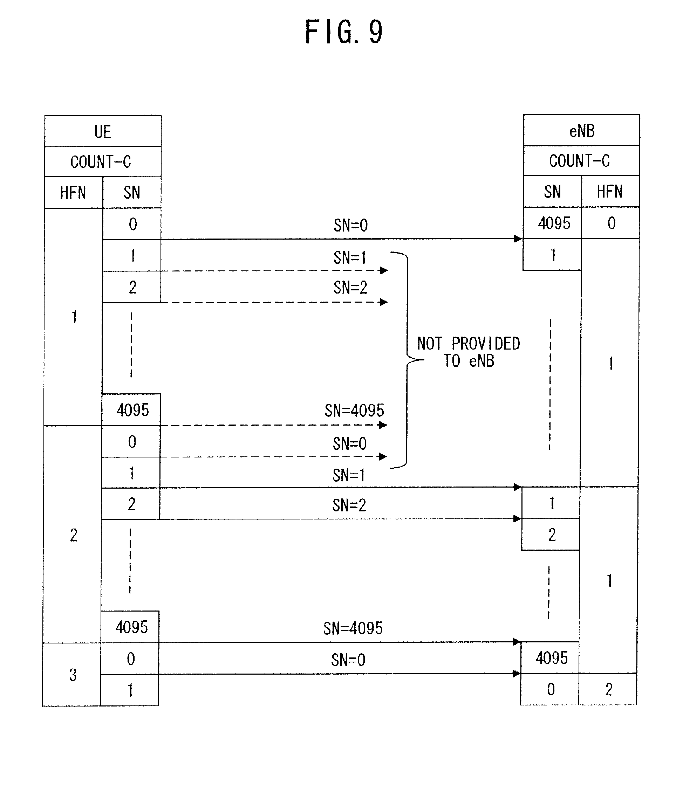

FIG. 9 illustrates how the parameter "COUNT-C" shows a change in the previous wireless communications system. When the element "HFN" indicates 1, the UE transmits the PDCP PDUs respectively assigned with the values of 0 to 4095 for the element "SN" to the eNB. When the element "SN" indicates "0" again after going through all the values in the sequence, the value in the element of "HFN" is incremented to 2, and the PDCP PDUs respectively assigned with the values of 0 to 4095 in the element "SN" are transmitted again to the eNB. The UE repeats such a transmission operation.

When the element "HFN" is 0 and the element "SN" is 4095, if the eNB is provided with the PDCP PDU in which the element "SN" is 0, the eNB sets the initial value 0 to the element "SN", and increments the element "HFN" by 1. In this case, when the PDCP PDUs respectively assigned the values 1 to 4095 in the element "SN" are not provided to the eNB, and when the next PDCP PDU assigned with the value 0 in the element "SN" is also not provided to the eNB, the element "SN" in the eNB remains at 0 with no increment.

Next, when the element "HFN" in the UE is 2, if the eNB is provided with the PDCP PDUs respectively assigned the values 1 to 4095 in the element "SN", the eNB increments the value in the element "SN". Thereafter, when the element "SN" is 0 after going through all the values in the sequence, the eNB increments the element "HFN" by 2. At this point in time, however, the element "HFN" in the UE is already 3.

Thus, in the second or later PDCP PDUs assigned the value 1 for the element "SN", the parameter "COUNT-C" varies in value between the UE and the eNB, and thus the eNB cannot correctly restore the Plain Text from the provided Cipher Text.

This occurrence of the Plain Text restoration on the reception end being different from the Plain Text on the transmission end is referred to as "asynchronization of ciphering." The problem here is that, on the reception end, there may be no way to detect such asynchronization of ciphering because the expected value of the Plain Text is not known. If such asynchronization of ciphering occurs, with the resulting audio service, the audio on the reception end will sound unusual, and with the resulting packet service, the throughput may be reduced.

### SUMMARY

Accordingly, an embodiment of one aspect of the invention is to detect asynchronization of ciphering between the transmission and reception ends in a wireless communications system.

According to embodiments of an aspect of the invention, a transmission device encrypts ciphering-process-target data using encryption information, and assigns sequence information to the encrypted ciphering-process-target data for transmission to a reception device. The transmission device includes a generation section configured to encrypt information shared between the transmission device and the reception device using first encryption information which changes in accordance with the sequence information, and generate encrypted data for the shared information; a transmission section configured to transmit, to the reception device, the encrypted data for the shared information; a reception section configured to receive, from the reception device, information about a result of a comparison between the shared information and a result of decrypting the encrypted data for the shared information using second encryption information which changes in accordance with the sequence information assigned to the encrypted ciphering-process-target data at the reception device; and a determination section configured to determine, based on the information about the comparison result, whether or not a match is observed between the first and second encryption information.

According to embodiments of an aspect of the invention, a reception device receives, from a transmission device, ciphering-process-target data encrypted using encryption information and assigned with sequence information. The reception device includes a reception section configured to receive, from the transmission device, information shared between the transmission device and the reception device encrypted by the transmission device using first encryption information which changes in accordance with the sequence information; a determination section configured to decrypt the encrypted data for the shared information using second encryption information which changes in accordance with the sequence information assigned to the encrypted ciphering-process-target data, and compares a result of the decryption result and the shared information; and a transmission section that transmits, to the transmission device, information about a result of the comparison made between the decryption result and the shared information.

### BRIEF DESCRIPTION OF THE DRAWINGS

Preferred features of the present invention will now be described, purely by way of example, with reference to the accompanying drawings, in which:-

FIG. 1 is a diagram illustrating the configurations of communications devices of an embodiment;

FIG. 2 is a diagram illustrating the correlation between PDCP PDUs and encryption information;

FIG. 3 is a flowchart of determination ciphering synchronization control;

FIG. 4 is a diagram illustrating a change of a parameter "COUNT-C" in a wireless communications system of the embodiment;

FIG. 5 is a diagram illustrating the configuration of the wireless communications system;

FIG. 6 is a diagram illustrating a user protocol stack;

FIG. 7 is a diagram illustrating a PDCP PDU format;

FIG. 8 is a diagram illustrating a ciphering process; and

FIG. 9 is a diagram illustrating a change of the parameter "COUNT-C" in a previous wireless communications system.

### DESCRIPTION OF EMBODIMENTS

The best mode for carrying out the invention is described in detail below by referring to the accompanying drawings.

In the embodiment, a communications device transmits data at regular intervals for checking the synchronization of ciphering, and through such data transmission, checks the state of the synchronization of ciphering. When the synchronization of ciphering is not observed, encryption information under the management of the transmission end is transmitted to the reception end for recovering the synchronization of ciphering.

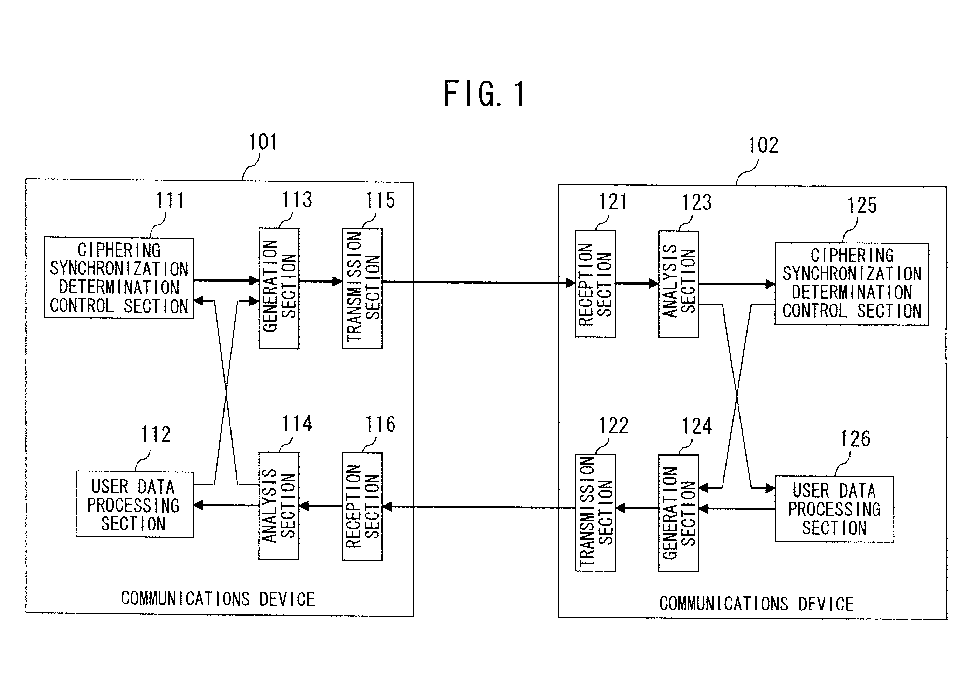

FIG. 1 is a diagram illustrating configurations of communications devices of the embodiment. In FIG. 1, communications devices 101 and 102 respectively correspond to the UE and the eNB.

The communications device 101 is configured to include a ciphering synchronization determination control section 111, a user data processing section 112, a generation section 113, an analysis section 114, a transmission section 115, and a reception section 116. The ciphering synchronization determination control section 111 includes the key generation section 21 and the computation section 22, and the user data processing section 112 includes the key generation section 23 and the computation section 24, as illustrated in FIG. 8.

The ciphering synchronization determination control section 111 generates a cipher text of control data for checking and recovering the synchronization of ciphering. The resulting cipher text is forwarded to the generation section 113. The user data processing section 112 generates a cipher text of user data subject to the ciphering process, and forwards the resulting cipher text to the generation section 113. The generation section 113 generates a PDCP PDU in which the element "PDCP SDU" is set with the cipher text of the control data or of the user data, and the transmission section 115 transmits the resulting PDCP PDU to the communications device 102.

The reception section 116 receives the PDCP PDU from the communications device 102. The analysis section 114 analyzes the PDCP PDU and forwards the cipher text of the control data set in the element "PDCP SDU" to the ciphering synchronization determination control section 111. The analysis section 114 then forwards the cipher text of the user data to the user data processing section 112. The ciphering synchronization determination control section 111 decrypts the cipher text, and restores the plain text of the control data, thereby performing control for checking and recovering the synchronization of ciphering. The user data processing section 112 decrypts the cipher text, and restores the plain text of the user data, thereby processing the user data.

The communications device 102 is configured to include a reception section 121, a transmission section 122, an analysis section 123, a generation section 124, a ciphering synchronization determination control section 125, and a user data processing section 126. The ciphering synchronization determination control section 125 includes the key generation section 21 and the computation section 22, and the user data processing section 126 includes the key generation section 23 and the computation section 24, as illustrated in FIG. 8.

The reception section 121 is provided with the PDCP PDU from the communications device 101. The analysis section 123 analyzes the PDCP PDU, and forwards the cipher text of the control data set in the element "PDCP SDU" to the ciphering synchronization determination control section 125. The analysis section 114 then forwards the cipher text of the user data to the user data processing section 126.

The ciphering synchronization determination control section 125 decrypts the cipher text, and restores the plain text of the control data, thereby performing control for checking and recovering the synchronization of ciphering. The ciphering synchronization determination control section 125 generates a cipher text of the control data, and forwards the resulting cipher text to the generation section 124. The user data processing section 126 decrypts the cipher text, and restores the plain text of the user data, thereby processing the user data. The user data processing section 126 also generates a cipher text of the user data, which is subject to the ciphering process, and forwards the resulting cipher text to the generation section 124.

The generation section 124 generates a PDCP PDU in which the element "PDCP SDU" is set with the cipher text of the control data or of the user data, and the transmission section 122 forwards the resulting PDCP PDU to the communications device 101.

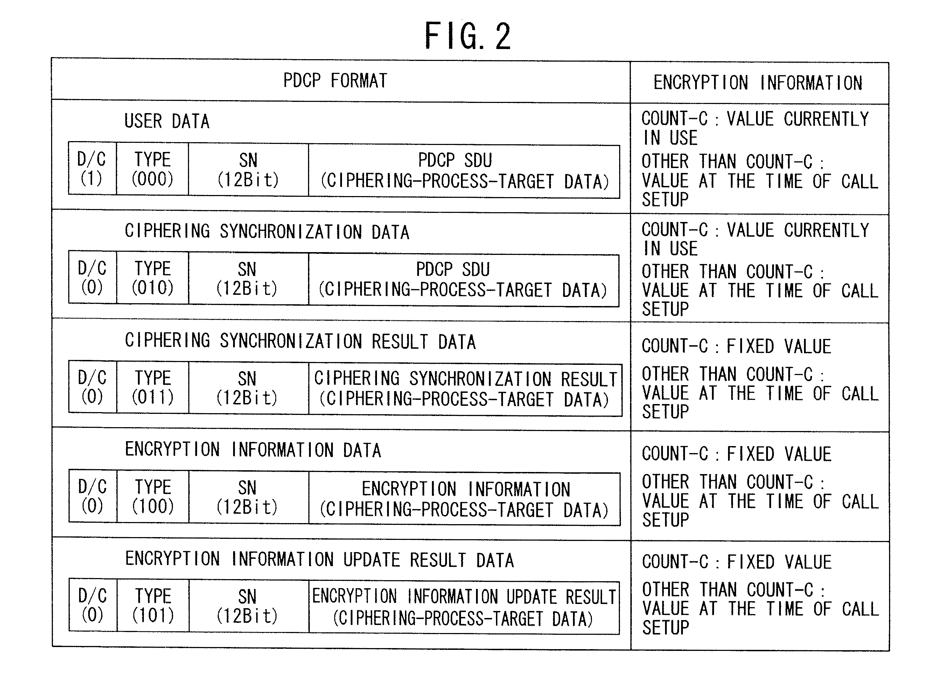

FIG. 2 is a diagram illustrating the correlation between the PDCP PDUs and the encryption information for use in the wireless communications system of this embodiment. In the ciphering process for any of the PDCP PDUs, the parameters in the encryption information other than the parameter "COUNT-C" take values at the time of a call setup. On the other hand, the parameter "COUNT-C" takes a value in accordance with the type of the corresponding PDCP PDU.

When the PDCP PDU is user data (D/C = 1), the parameter "COUNT-C" takes the value currently in use. The PDCP PDU (D/C = 0) of the control data may be classified into four types depending on the value in the element "TYPE": ciphering synchronization data when the element "TYPE" indicates "010", ciphering synchronization result data when the element "TYPE" indicates "011", encryption information data when the element "TYPE" indicates "100", and encryption information update result data when the element "TYPE" indicates "101".

Among such types of data, the ciphering synchronization data takes the value currently in use as the parameter "COUNT-C", and the remaining data, e.g., the ciphering synchronization result data, the encryption information data, and the encryption information update result data, each take a fixed value determined in advance for use as the parameter "COUNT-C".

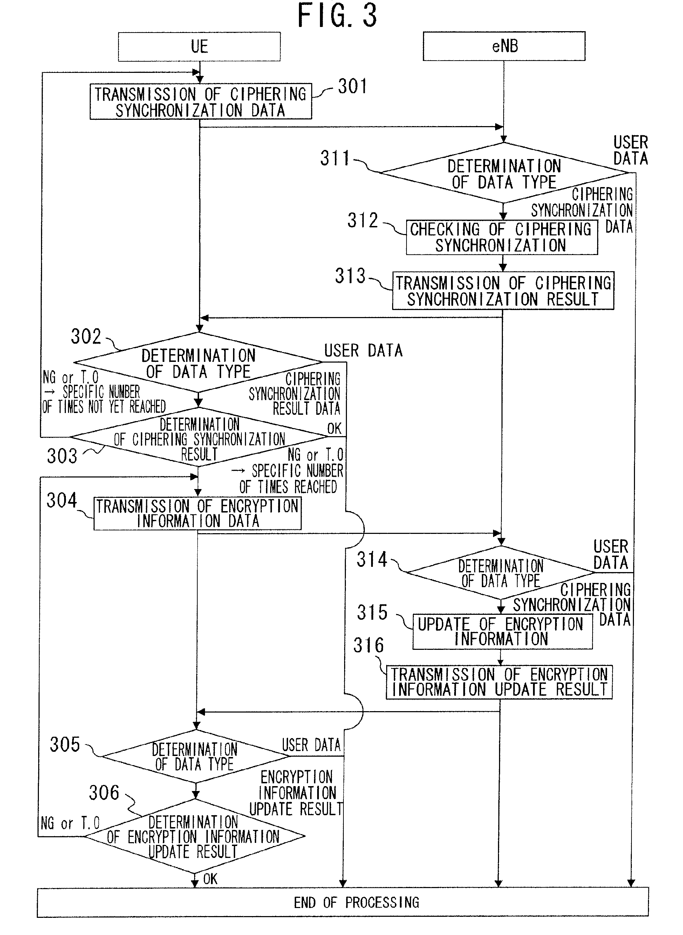

FIG. 3 is a flowchart of the ciphering synchronization determination control for UE to check if eNB ciphering synchronization is established. In such a case, the UE and the eNB respectively correspond to the communications devices 101 and 102 of FIG. 2. For the eNB to check whether the synchronization of ciphering is established with the UE or not, the control similar to FIG. 3 is performed.

First of all, the UE generates the ciphering synchronization data, and forwards the resulting data to the eNB (step 301). In this case, the ciphering synchronization determination control section 111 uses, as a plain text, a fixed value of shared use between the UE and the eNB, e.g., 0xAAA or others (hereinafter, referred to as "plain-text fixed value"), and generates a cipher text. The parameter "COUNT-C" takes the value currently in use by the user data processing section 112 with respect to the current user data.

The generation section 113 assigns the value "010" to the element "TYPE" as ciphering synchronization identification information, provides a value to the element "SN", and sets the cipher text to the element "PDCP SDU", thereby generating the ciphering synchronization data. The transmission section 115 forwards the resulting ciphering synchronization data to the eNB.

The transmission section 115 transmits the ciphering synchronization data using the designated value in the element "SN", for example. Alternatively, the transmission section 115 transmits the ciphering synchronization data at regular intervals of 1 second, 10 seconds, and the like. Note here that the transmission section 115 does not perform such transmission of the ciphering synchronization data at regular intervals during transmission of the encryption information data that will be described later.

The analysis section 123 of the eNB then determines the type of the data based on the value found in the element of "TYPE" in the provided PDCP PDU (step 311). When the element "TYPE" indicates the value "000", the analysis section 123 of the eNB determines that the data is user data, thereby providing the cipher text to the user data processing section 126. On the other hand, when the element "TYPE" indicates the value "010", the analysis section 123 of the eNB determines that the data is the ciphering synchronization data, thereby forwarding the cipher text to the ciphering synchronization determination control section 125.

Using the value of the parameter "COUNT-C" currently used by the user data processing section 126 with respect to the current user data, the ciphering synchronization determination control section 125 restores the plain text from the cipher text, thereby checking whether the synchronization of ciphering is being established or not (step 312). At this time, the ciphering synchronization determination control section 125 compares the resulting restored plain text with the plain-text fixed value described above, and generates the ciphering synchronization result. When a match is observed therebetween, the ciphering synchronization result is OK, and when no match is observed therebetween, the ciphering synchronization result is NG (Not Good).

Next, the eNB transmits the resulting ciphering synchronization result to the UE as the ciphering synchronization result data (step 313). At this time, using the ciphering synchronization result as a plain text, the ciphering synchronization determination control section 125 generates the cipher text thereof. The fixed value of shared use between the UE and the eNB, e.g., 0xFFFFFFFF, (hereinafter, referred to as "COUNT-C fixed value") is used as the parameter "COUNT-C".

The generation section 124 assigns the value "011" to the element "TYPE" for use as ciphering synchronization result identification information, provides a value to the element "SN", and sets the cipher text to the element "PDCP SDU", thereby generating ciphering synchronization result data. The transmission section 122 forwards the resulting ciphering synchronization result data to the UE.

The analysis section 114 of the UE then determines the type of the data using the value found in the element "TYPE" in the provided PDCP PDU (step 302). When the element of "TYPE" indicates the value "000", the analysis section 114 determines that the data is the user data, and forwards the cipher text to the user data processing section 112. On the other hand, when the element "TYPE" indicates the value "011", the analysis section 114 determines that the data is the ciphering synchronization result data, and forwards the cipher text to the ciphering synchronization determination control section 111.

Using the COUNT-C fixed value described above, the ciphering synchronization determination control section 111 restores the plain text of the ciphering synchronization result from the cipher text, thereby making a determination about the ciphering synchronization result (step 303). When the ciphering synchronization result about the restoration result indicates "OK", the ciphering synchronization determination control section 111 determines that a match is observed between the UE and the eNB in terms of the value of the parameter "COUNT-C", and this is the end of the processing.

When the ciphering synchronization result indicates "NG", the ciphering synchronization determination control section 111 determines that no match is observed between the UE and the eNB in terms of the value of the parameter "COUNT-C". When the frequency of receiving the ciphering synchronization result indicating that the ciphering synchronization result is "NG" is not yet reached a specific number of times, the procedure repeats the process from step 301.

Note here that when the ciphering synchronization result data does not come from the eNB within a fixed length of time after the ciphering synchronization data is transmitted, the UE determines the situation as a time-over, and goes through the process similar to when the ciphering synchronization result is NG. Accordingly, when the frequency of the ciphering synchronization result indicating NG or the occurrence frequency of the time-over has not yet reached the specific number of times, the procedure repeats the process from step 301.

When the ciphering synchronization result continues to indicate "NG", or the time-over continues to occur in the UE, it is highly likely that the parameter "COUNT-C" currently in use by the eNB has not been incremented normally. In consideration thereof, when the frequency of the ciphering synchronization result indicating "NG" or the occurrence frequency of a time-over reaches the specific number of times, the UE generates the encryption information data for transmission to the eNB to notify the eNB of the current value of the parameter of "COUNT-C" (step 304).

At this time, using, as a plain text, the value of the parameter "COUNT-C" currently used by the user data processing section 112 with respect to the current user data, the ciphering synchronization determination control section 111 generates the cipher text thereof. The COUNT-C fixed value described above is used as the parameter "COUNT-C" to generate the KEYSTREAM BLOCK.

The generation section 113 assigns the value "100" to the element "TYPE" as encryption information identification information, provides a value to the element "SN", and sets the cipher text to the element "PDCP SDU", thereby generating encryption information data. The transmission section 115 then forwards the resulting encryption information data to the eNB.

The analysis section 123 of the eNB then determines the type of the data based on the value found in the element "TYPE" in the provided PDCP PDU (step 314). When the element "TYPE" indicates the value "000", the analysis section 123 determines that the data is the user data, thereby providing the cipher text to the user data processing section 126. On the other hand, when the element "TYPE" indicates the value "100", the analysis section 123 determines that the data is the encryption information data, thereby forwarding the cipher text to the ciphering synchronization determination control section 125.

Using the COUNT-C fixed value described above, the ciphering synchronization determination control section 125 restores the plain text from the cipher text, thereby updating the encryption information (step 315). At this time, the ciphering synchronization determination control section 125 changes the value of the parameter "COUNT-C" being used by the user data processing section 126 with respect to the current user data to the value of the parameter "COUNT-C" that is the restoration result. As such, the parameter "COUNT-C" in the eNB is updated to the correct value used in the UE.

After updating the parameter "COUNT-C" as such, the ciphering synchronization determination control section 125 generates the encryption information update result. When such update of the parameter "COUNT-C" is completed normally, the encryption information update result indicates "OK", and when such update of the parameter "COUNT-C" is not completed normally, the encryption information update result indicates "NG".

Next, the eNB transmits the resulting encryption information update result to the UE as encryption information update result data (step 316). At this time, using the encryption information update result as a plain text, the ciphering synchronization determination control section 125 generates the cipher text thereof. The COUNT-C fixed value described above is used as the parameter "COUNT-C.".

The generation section 124 assigns the value "101" to the element "TYPE" as encryption information update result identification information, provides a value to the element "SN", and sets the cipher text to the element "PDCP SDU", thereby generating the encryption information update result data. The transmission section 122 then forwards the resulting encryption information update result data to the UE.

The analysis section 114 of the UE then determines the type of the data using the value found in the element "TYPE" in the provided PDCP PDU (step 305). When the element "TYPE" indicates the value of "000", the analysis section 114 determines that the data is the user data, and forwards the cipher text to the user data processing section 112. On the other hand, when the element "TYPE" indicates the value "101", the analysis section 114 determines that the data is the encryption information update result data, and forwards the cipher text to the ciphering synchronization determination control section 111.

Using the COUNT-C fixed value described above, the ciphering synchronization determination control section 111 restores the plain text of the encryption information update result from the cipher text, thereby making a determination about the encryption information update result (step 306). When the restored encryption information update result indicates "OK", the UE resets the frequency of the ciphering synchronization result indicating "NG" or the occurrence of a time-over to "0", and thus completes the processing. When the encryption information update result indicates "NG", the procedure repeats the process from step 304.

Note here that when the encryption information update result data does not come from the eNB within a fixed length of time after the encryption information data is transmitted, the UE determines that a time-over has occurred, and goes through the process similar to when the encryption information update result is "NG". Accordingly, when the time-over occurs, the procedure repeats the process from step 304.

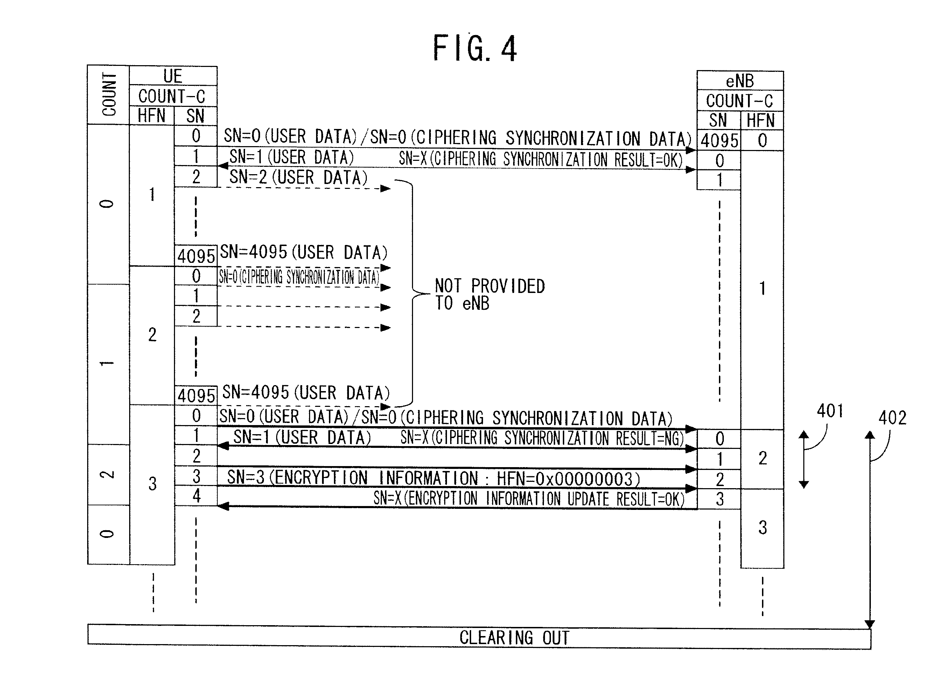

FIG. 4 is a diagram illustrating a change of the parameter "COUNT-C" used in the user data of both the UE and the eNB. In this example, the specific number of times in step 303 is set to 2, and out of the elements "HFN" and "SN" configuring the parameter "COUNT-C", the UE and the eNB use only the element "HFN" as a plain text of the encryption information data.

When the element "HFN" indicates "1", the UE forwards the PDCP PDUs of the user data respectively assigned with the values of 0 to 4095 in the element "SN" to the eNB. When the element "SN" indicates "0" again after going through all the values, the UE increments the element "HFN" to 2, and transmits the PDCP PDUs of the user data assigned with the values of 0 to 4095 in the element "SN" again to the eNB.

The UE generates a cipher text of the plain-text fixed value using the parameter "COUNT-C" (elements "HFN" and "SN") in use at regular time intervals of transmitting the user data with the SN "0". The UE then generates the PDCP PDU of the ciphering synchronization data assigned with the value "0" in the element "SN", and transmits the resulting PDCP PDU to the eNB. The UE repeats such a transmission operation.

When the element "HFN" is "0" and the element "SN" is "4095", if the eNB is provided with the PDCP PDU assigned with the value "0" in the element "SN", the eNB sets the initial value of "0" to the value in the element "SN", and increments the element "HFN" to "1". When receiving the ciphering synchronization data assigned with the value of "0" in the element "SN", the eNB restores the plain-text fixed value using the parameter "COUNT-C" currently in use. The eNB then generates a cipher text indicating that the ciphering synchronization result is "OK" using the COUNT-C fixed value, and generates the PDCP PDU of the ciphering synchronization result data assigned with an appropriate value for the element "SN", e.g., SN = X, for transmission to the UE.

Using the COUNT-C fixed value, the UE restores the plain text indicating that the ciphering synchronization result is "OK" from the ciphering synchronization result data. Accordingly, the count of the ciphering synchronization results indicating "NG" or of the occurrence of time-overs remains at "0", and thus the UE does not forward the encryption information data to the eNB.

After receiving the user data assigned with the value of "1" in the element "SN", the eNB increments the element "SN" to "1". Thereafter, when the user data assigned with the values of 2 to 4095 in the element "SN" is not provided to the eNB, and when the user data assigned with the values of 0 to 4095 in the element "SN" is not provided to the eNB after the element "HFN" is set to 2, the element "SN" of the eNB remains at "1" with no increment.

In this case, the ciphering synchronization data assigned with the value "0" in the element "SN" is also not provided to the eNB, and the UE thus is not provided with the ciphering synchronization result data from the eNB. Accordingly, the UE changes the value of the count of the ciphering synchronization result indicating "NG" or the occurrence of time-overs to "1".

When receiving the user data assigned with the value "0" in the element "SN" when the element "HFN" of the UE indicates "3", the eNB sets "0" for the element "SN", and sets "2" for the element "HFN". As a result, the value in the element "SN" of the eNB becomes the same as the value in the element "SN" of the UE, but the value in the element "HFN" of the eNB does not become the same as the value in the element "HFN" of the UE because the element "HFN" of the UE already indicates "3".

Using the parameter "COUNT-C" in which the element "HFN" indicates "3" and the element "SN" indicates "0", the UE generates a cipher text with the plain-text fixed value. The UE then generates the ciphering synchronization data assigned with the value of "0" in the element "SN", and transmits the resulting data to the eNB.

Upon reception of the ciphering synchronization data, the eNB restores the plain text from the cipher text using the parameter "COUNT-C" in which the element "HFN" indicates "2", and the element "SN" indicates "0". However, because the parameter "COUNT-C" in the eNB is not the same as the parameter "COUNT-C" in the UE, the restoration result does not become the same as the plain-text fixed value, and thus the ciphering synchronization result indicates "NG". Therefore, the eNB generates a cipher text indicating that the ciphering synchronization result is "NG" using the COUNT-C fixed value, and generates the PDCP PDU of the ciphering synchronization result data assigned with the value "X" in the element "SN" for transmission back to the UE. Moreover, after receiving the user data in which the element "SN" indicates "1" or more, the eNB increments the value in the element "SN" in a sequential manner.

After receiving the ciphering synchronization result data from the eNB, the UE restores the plain text indicating that the ciphering synchronization result is "NG" from the ciphering synchronization result data using the COUNT-C fixed value, and changes the value of the count of the ciphering synchronization result indicating "NG" or of the occurrence of the time-over to "2". Herein, because the count indicates "2" which is the specific number of times, the UE generates a cipher text of the encryption information (HFN = 3) using the COUNT-C fixed value, and generates the PDCP PDU of the encryption information data assigned with the value of "3" in the element "SN" for transmission to the eNB.

After receiving the encryption information data, the eNB restores the plain text of the encryption information using the COUNT-C fixed value, and changes the value in the element "HFN" to "3" in accordance with the encryption information restored as such. As a result, the element "HFN" of the eNB indicates the same value as the element "HFN" of the UE, and the value of the parameter "COUNT-C" becomes a normal value again. Thereafter, the eNB generates a cipher text of the encryption information update result indicating "OK" using the COUNT-C fixed value, and generates the PDCP PDU of the encryption information update result data assigned with the value of X in the element of "SN" for transmission to the UE.

Upon reception of the encryption information update result data, the UE restores the plain text of the encryption information update result indicating "OK" from the encryption information update result data using the COUNT-C fixed value, and resets the count of the ciphering synchronization results indicating "NG" or the count of the time-overs to "0".

With the related art wireless communications system, in a section after the third user data assigned with the value "0" in the element "SN", i.e., section 402, the parameter "COUNT-C" varies in value between the UE and the eNB, whereby the eNB cannot restore the correct plain text from the cipher text. On the other hand, with the wireless communications system of the embodiment described herein, because the encryption information data is transmitted from the UE to the eNB, the restoration result thus becomes different only in section 401. After the user data assigned with the value of 3 in the element "SN" in the section 401, normal communications may be recovered.

According to an aspect of the embodiment, with such a transmission device and a reception device, the information of shared use between the transmission and reception devices can be used as a basis to determine whether or not a match is observed between the first encryption information in the transmission device and the second encryption information in the reception device. When no match is observed between the first and second encryption information, to achieve the matching therebetween, the transmission device may forward the first encryption information to the reception device, and the second encryption information may be updated based on the provided first encryption information, for example.

The transmission and reception devices respectively correspond to, for example, communications devices 101 and 102, and the sequence information and the encryption information respectively correspond to, for example, an element "SN" and a parameter "COUNT-C".

According to the transmission and reception devices of the embodiment, an asynchronization of ciphering occurring between the transmission and reception devices can be automatically detected and recovered. Accordingly, the resulting audio service may sound normal, and the resulting packet service may not cause the reduction of the throughput.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A transmission device that encrypts ciphering-process-target data using encryption information, and assigns sequence information to the encrypted ciphering-process-target data for transmission to a reception device, the transmission device comprising:
a generation section configured to encrypt shared information between the transmission device and the reception device using first encryption information which changes in accordance with the sequence information, and generate encrypted data for the shared information;
a transmission section configured to transmit, to the reception device, the encrypted data for the shared information;
a reception section configured to receive, from the reception device, comparison result information about a result of a comparison between the shared information and a decryption result of decrypting the encrypted data for the shared information using second encryption information which changes in accordance with the sequence information assigned to the encrypted ciphering-process-target data at the reception device; and
a determination section configured to determine, based on the comparison result information , whether the first and second encryption information match or not.

2. The transmission device according to claim 1, wherein
when the comparison result information does not indicate that the decryption result and the shared information match, the transmission section transmits the first encryption information to the reception device, and the reception section receives, from the reception device, update result information about a result of updating the second encryption information by the reception device based on the first encryption information.

3. A reception device receiving, from a transmission device, ciphering-process-target data encrypted using encryption information and assigned with sequence information, the reception device comprising:
a reception section configured to receive, from the transmission device, shared information shared between the transmission device and the reception device and encrypted by the transmission device using first encryption information which changes in accordance with the sequence information;
a determination section configured to decrypt the encrypted data for the shared information using second encryption information which changes in accordance with the sequence information assigned to the encrypted ciphering-process-target data, and compares a decryption result and the shared information; and
a transmission section that transmits, to the transmission device, comparison result information about the result of the comparison made between the decryption result and the shared information.

4. The reception device according to claim 3, wherein
when the comparison result information does not indicate a match between the decryption result and the shared information,
the reception section receives the first encryption information from the transmission device,
the determination section updates the second encryption information based on the first encryption information; and
the transmission section transmits, to the transmission device, update result information about a result of the updating of the second encryption information.

5. A transmission method, comprising:
encrypting ciphering-process-target data using first encryption information that changes in accordance with sequence information in a transmission device;
assigning the sequence information to the encrypted ciphering-process-target data for transmission to a reception device;
encrypting shared information shared between the transmission device and the reception device using the first encryption information;
transmitting the encrypted data for the shared information to the reception device;
receiving, from the reception device, comparison result information about a result of a comparison between the shared information and a result of decrypting the encrypted data for the shared information using second encryption information that changes in accordance with the sequence information assigned to the encrypted ciphering-process-target data at the reception device; and
determining, based on the comparison result information , whether the first and second encryption information match or not.

6. A reception method, comprising:
receiving, from a transmission device, ciphering-process-target data encrypted using first encryption information that changes in accordance with sequence information by the transmission device, and assigned with sequence information;
receiving, from the transmission device, encrypted data of shared information shared between the transmission device and the reception device which is encrypted using the first encryption information by the transmission device;
decrypting the encrypted data for the shared information using second encryption information that changes in accordance with the sequence information assigned to the encrypted ciphering-process-target data at the receiving device; and
comparing a decryption result and the shared information; and
transmitting, to the transmission device, comparison result information about the result of the comparison made between the decryption result and the shared information.

7. A wireless communications system having a transmission device according to claim 1 or 2, and a reception device according to claim 3 or 4.
